# EUROPÄISCHE PATENTSCHRIFT

(11) **EP 0 597 240 B1**
(45) Veröffentlichungstag und Bekanntmachung des Hinweises auf die Patenterteilung: **02.01.1997**
(21) Anmeldenummer: 93116037.8
(22) Anmeldetag: 05.10.1993
(51) Int. Cl.: B05B 1/30, B64G 1/50

(54) **Vorrichtung und Verfahren zum Einspritzen**
Injection device and process
Dispositif et procédé d'injection

(30) Priorität: 28.10.1992 DE 4236371
(43) Veröffentlichungstag der Anmeldung: 18.05.1994
(73) Patentinhaber: Daimler-Benz Aerospace Aktiengesellschaft, 80995 München (DE)
(72) Erfinder: Müller, Robert, D-28816 Moordeich (DE); Unger, Jochem, Prof. Dr., D-64739 Mümmling-Grumbach (DE)
(74) Vertreter: Hansmann, Dierk, Dipl.-Ing.

(56) Entgegenhaltungen:
- EP-A- 0 072 901
- GB-A- 2 030 474
- GB-A- 2 241 908
- US-A- 3 822 040
- US-A- 3 974 998

## Beschreibung

Die Erfindung betrifft eine Vorrichtung zum Einspritzen einer Flüssigkeit, insbesondere zum intermittierenden, nachtropffreien Einspritzen einer Flüssigkeit im Bereich einer Anlage zur Ableitung von Abfallwärme in Raumflugkörpern, die ein Gehäuse, mindestens einen Anker, eine Flüssigkeitszufuhr sowie eine Mündung aufweist und bei der das Gehäuse einen Innenraum umfaßt, der in einen mit der Mündung verbundenen Ausströmkanal sowie einen Aufnahmeraum unterteilt ist, in dem ein Kolben beweglich geführt ist und bei der der Aufnahmeraum von einem Durchlaß mit dem Ausströmkanal verbunden ist, der von einem mit dem Kolben verbundenen Absperrelement in einer Ruhepositionierung verschließbar ist.

Die Erfindung betrifft darüber hinaus ein Verfahren zum Einspritzen einer Flüssigkeit, insbesondere zum intermittierenden Einspritzen einer Flüssigkeit im Bereich einer Anlage zur Ableitung von Abfallwärme in Raumflugkörpern, bei dem die Flüssigkeit einer mit einem Ausströmkanal und einer Absperreinrichtung versehenen Düse zugeführt wird und bei dem nach der Beendigung einer Zufuhr an Flüssigkeit innerhalb des Ausströmkanals befindliche Flüssigkeit abgesaugt und bei einem erneuten Beginn der Zufuhr an Flüssigkeit die abgesaugte Flüssigkeit wieder in den Ausströmkanal geleitet wird.

Ein intermittierendes Einspritzen einer zu verdampfenden Flüssigkeit kann beispielsweise erfolgen, um einen konstanten Massenstrom und damit eine konstante räumliche Verteilung der versprühten Substanz während der Flüssigkeitszufuhr zu erreichen. Bei einer derartigen gepulsten Betriebsweise ist damit zu rechnen, daß nach einer Beendigung des Flüssigkeitspulses der Druck innerhalb des Raumes, dem die versprühte Flüssigkeit zugeführt wird, niedriger liegen kann, als der Dampfdruck der zugeführten Flüssigkeit. Hieraus resultiert die Gefahr, daß die innerhalb des Ausströmkanales der Vorrichtung nach einer Beendigung der Flüssigkeitszufuhr verbleibende Flüssigkeit verdampft. Dies kann zur Folge haben, daß ein Gemisch aus Dampf und Flüssigkeit aus der Düsenmündung austritt und eine Tropfenbildung verursacht.

Derartige Tropfen benetzen lediglich einen geringen Teil der Oberfläche einer von ihnen beaufschlagten Wandung oder verbleiben in der Nähe der Düsenmündung. Aufgrund einer Verdampfung dieser austretenden Flüssigkeit ist mit einer Vereisung im Bereich der Düsenmündung zu rechnen, wenn nicht eine zusätzliche elektrische Heizung vorgesehen ist. Neben diesem zusätzlichen apparativen Aufwand tritt zusätzlich der negative Effekt auf, daß die derartig austretende Flüssigkeit nicht am vorgesehenen Wärmeaustauschprozeß beziehungswseise an der vorgesehenen Kühlung teilnehmen kann und damit die nutzbare Menge an Flüssigkeit reduziert wird. Dies ist insbesondere bei Anwendungen im Bereich der Raumfahrt nachteilig, da hier bei einem maximal vorgegebenen Gesamtgewicht durch derartiges nicht nutzbares Zusatzgewicht das Gewicht für eine zu befördernde Nutzlast reduziert und damit die relativen Kosten erhöht werden.

Im Zusammenhang mit dem Problem, die in einem Raumflugkörper entstehende Abfallwärme, hervorgerufen beispielsweise durch die an Bord befindlichen elektrischen Geräte, an die Umgebung abzuführen, finden Einrichtungen Verwendung, die als Verdampfungswärmetauscher bezeichnet werden und die beispielsweise in der Druckschrift "Shuttle Orbiter Flash Evaporator", J.R. Mason, Hamilton Standard, 79-ENYS-14, American Society of Mechanical Engineers (Hrsg.), beschrieben sind. Bei diesen Verdampfungswärmetauschern wird eine zu mehreren aktiven Kühlkreisläufen gehörende Kühlflüssigkeit in thermischen Kontakt mit einem zu verdampfenden Medium gebracht, das über eine Einspritzdüse in Form eines aus Flüssigkeitströpfchen bestehenden Strahls in den Pozeßraum des Wärmetauschers gesprüht wird. Dabei gelangen die Tröpfchen in Kontakt mit den diesen Raum begrenzenden Wänden, die von der Kühlflüssigkeit durchströmt werden. Unter Aufnahme von Wärme aus den Wänden, die damit zugleich der Kühlflüssigkeit entzogen wird, gehen die Tröpfchen in die Dampfphase über und werden als solcher in die Umgebung des Raumflugkörpers abgeblasen.

Aus der EP-A-72901 (vgl. Oberbegriff des Anspruchs 1 und des Anspruchs 12) ist bereits eine Vorrichtung zum Einspritzen einer Flüssigkeit bekannt, die ein Gehäuse, einen Anker sowie eine Flüssigkeitszufuhr aufweist. Die Vorrichtung weist eine Mündung auf und das Gehäuse umfaßt einen Innenraum, der in einen mit der Mündung verbundenen Ausströmkanal sowie einen Aufnahmeraum unterteilt ist. Im Aufnahmeraum ist ein Kolben beweglich geführt. Der Aufnahmeraum ist von einem Durchlaß mit dem Ausströmkanal verbunden. Der Durchlaß ist von einem mit dem Kolben verbundenen Absperrelement in einer Ruhepositionierung verschließbar. Nach der Beendigung einer Zufuhr an Flüssigkeit wird innerhalb des Ausströmkanals befindliche Flüssigkeit abgesaugt und bei einem erneuten Beginn der Zufuhr an Flüssigkeit wird die abgesaugte Flüssigkeit wieder in den Ausströmkanal geleitet.

Aufgabe der vorliegenden Erfindung ist es, eine Vorrichtung der einleitend genannten Art derart zu konstruieren, daß sowohl eine hohe Ausnutzung der zugeführten Flüssigkeit sichergestellt als auch eine Vereisungsneigung reduziert wird.

Diese Aufgabe wird erfindungsgemäß dadurch gelöst, daß die Mündung als eine Düsenmündung und das Gehäuse als ein Düsengehäuse ausgebildet ist, daß der Kolben im wesentlichen plattenförmig ausgebildet und mit einem Arbeitsschaft verbunden ist, in dem eine Axialbohrung angeordnet ist und daß die Axialbohrung den Ausströmkanal mit einem Einlaßvolumen verbindet, sowie zwischen dem Kolben und dem Düsengehäuse zur Abdichtung des Aufnahmeraumes relativ zum Einlaßvolumen eine flexible Dichtung angeordnet ist.

Weitere Aufgabe der vorliegenden Erfindung, ist es, ein Verfahren der einleitend genannten Art so zu verbessern, daß eine Nachtropfneigung der Düse nach einer Beendigung der Flüssigkeitszufuhr verringert wird.

Diese Aufgabe wird erfindungsgemäß durch die Merkmale des Kennzeichens des Anspruchs 12 gelöst.

Durch die Absaugung der Flüssigkeit aus dem Düseninnenraum wird ein unkontrollierter Austritt aus der Düsenmündung und damit die Gefahr einer Vereisung vermieden. Es kann somit auf eine zusätzliche Beheizung der Düsenmündung verzichtet werden, beziehungsweise es kann zumindest eine Heizung geringerer Leistungsfähigkeit installiert werden. Aufgrund der Vermeidung von Abtropfverlusten kann die Menge an bereitgestellter Kühlflüssigkeit minimiert werden.

Durch die Anordnung eines beweglichen Kolbens innerhalb des Düsengehäuses kann eine äußerst kompakte Ausführungsform gewährleistet werden. Zur Durchführung eines Absaugvorganges wird der Kolben verschoben und saugt die überschüssige Flüssigkeit aus dem Bereich des Ausströmkanales in den Bereich des Aufnahmeraumes hinein. Nach einer Beendigung des Absaugvorganges wird durch das Dichtelement ein unkontrollierter Übertritt von Flüssigkeit aus dem Aufnahmeraum in den Ausströmkanal vermieden. Bei einer Kolbenbewegung in eine umgekehrte Richtung wird die Flüssigkeit aus dem Aufnahmeraum wieder in den Ausströmkanal befördert. In Abhängigkeit von den jeweils vorliegenden konkreten Einsatzbedingungen kann dies entweder vor, nach, beziehungsweise zeitgleich mit einer erneuten Zufuhr an Flüssigkeit erfolgen.

Eine kompakte und raumsparende Anordnung mit geringen zu bewegenden Massen kann dadurch bereitgestellt werden, daß der Kolben im wesentlichen plattenförmig ausgebildet und mit mindestens einer Radialbohrung versehen ist, die ein der Flüssigkeitszufuhr zugewandt angeordnetes Einlaßvolumen mit einer Axialbohrung verbindet, die innerhalb eines den Kolben mit dem Auslaßkanal verbindenden Arbeitsschaftes angeordnet ist.

Eine leichte und gleichzeitig stabile Ausführungsform kann insbesondere dadurch bereitgestellt werden, daß der Arbeitsschaft im wesentlichen rohrförmig ausgebildet ist.

Zur Integration einer Ventilfunktion in den Aufbau des Arbeitsschaftes und zur Ableitung der Ventilfunktion von einer jeweiligen Kolbenpositionierung wird vorgeschlagen, daß der Arbeitsschaft im Bereich seiner dem Kolben abgewandten Ausdehnung mit einem Ausströmkopf versehen ist, der Auslaßkanäle aufweist, die in einer Ruhepositionierung von einem Dichtelement verschlossen sind.

Ein Eindringen von Flüssigkeit in den Bereich des den Kolben positionierenden Schaftes wird dadurch vermieden, daß zwischen dem Kolben und dem Düsengehäuse zur Abdichtung des Einlaßvolumens relativ zu einem Zwischenraum, der zwischen einem Schaft zur Positionierung des Kolbens sowie einem den Schaft führenden Stutzen angeordnet ist, eine flexible Dichtung angeordnet ist.

Eine ausreichend flexible Ausbildung der Dichtung kann beispielsweise dadurch bereitgestellt werden, daß mindestens eine der Dichtungen als ein Faltenbalg ausgebildet ist.

Zur Ermöglichung einer flüssigkeitsdichten Ausbildung der Kombination aus dem Schaft und dem den Schaft führenden Stutzen wird vorgeschlagen, daß zur Positionierung des Schaftes ein Elektromagnet vorgesehen ist, der bezüglich des einen Anker ausbildenden Schaftes radial angeordnet ist.

Die Anzahl der verwendeten Bauelemente und damit die Komplexität der Vorrichtung kann dadurch reduziert werden, daß eine Positionierung des Kolbens in Abhängigkeit von einem Flüssigkeitsdruck im Bereich der Flüssigkeitszufuhr vorgesehen ist.

Zur Ermöglichung eines Flüssigkeitsübertrittes zwischen dem Aufnahmeraum und dem Ausströmkanal lediglich während der Dauer von Positionsveränderungen des Kolbens wird vorgeschlagen, daß zur Abdichtung des Aufnahmeraumes relativ zum Ausströmkanal in einer Arbeitspositionierung ein Steg vorgesehen ist, der ein im wesentlichen ringförmig ausgebildetes Dichtelement trägt, das zu dem Absperrelement korrespondiert.

Eine definierte Öffnung des aus dem Dichtelement und dem Ausströmkopf ausgebildeten Ventils in Abhängigkeit von einer jeweiligen Positionierung des Arbeitsschaftes kann dadurch erfolgen, daß das Dichtelement relativ zum Steg von einer Feder verspannt angeordnet ist.

Eine Reduzierung der bei einem Funktionswechsel zu bewegenden Menge an Flüssigkeit und damit eine Verkürzung der Einspritzdauer kann dadurch erfolgen, daß ein die Axialbohrung vorgebbar absperrendes Ventil, das im wesentlichen aus Einströmöffnungen und einem Dichtelement ausgebildet ist, im Bereich einer dem Schaft zugewandten Ausdehnung des Kolbens angeordnet ist.

In der Zeichnung sind Ausführungsbeispiele der Erfindung schematisch dargestellt. Es zeigen:
- Fig. 1: einen Querschnitt durch eine Vorrichtung in einer verschlossenen Positionierung,
- Fig. 2: einen Querschnitt durch die Vorrichtung gemäß Figur 1 in einer Arbeitspositionierung,
- Fig. 3: einen Querschnitt durch eine andere Vorrichtung, bei der zwei Flüssigkeitszuführungen, zwei Aufnahmeräume sowie zwei im Bereich der Düsenmündung zusammengeführte Auströmkanäle vorgesehen sind und
- Fig. 4: einen Querschnitt durch eine zweite Ausführung der Vorrichtung, bei der durch eine Modifikation der Stromführung das Hubvolumen auf ein Minimum reduziert wird und eine Positionierung des Kolbens mit Hilfe eines Elektromagneten erfolgt.

Die Vorrichtung zum Einspritzen einer Flüssigkeit besteht im wesentlichen aus einem Düsengehäuse (1), das mit einer Flüssigkeitszufuhr (2) sowie einer Düsenmündung (3) versehen ist. Das Düsengehäuse (1) umschließt einen Innenraum (4), der in einen Aufnahmeraum (5) und einen Ausströmkanal (6) unterteilt ist. Der Aufnahmeraum (5) ist mit dem Ausströmkanal (6) über einen Durchlaß (7) verbunden.

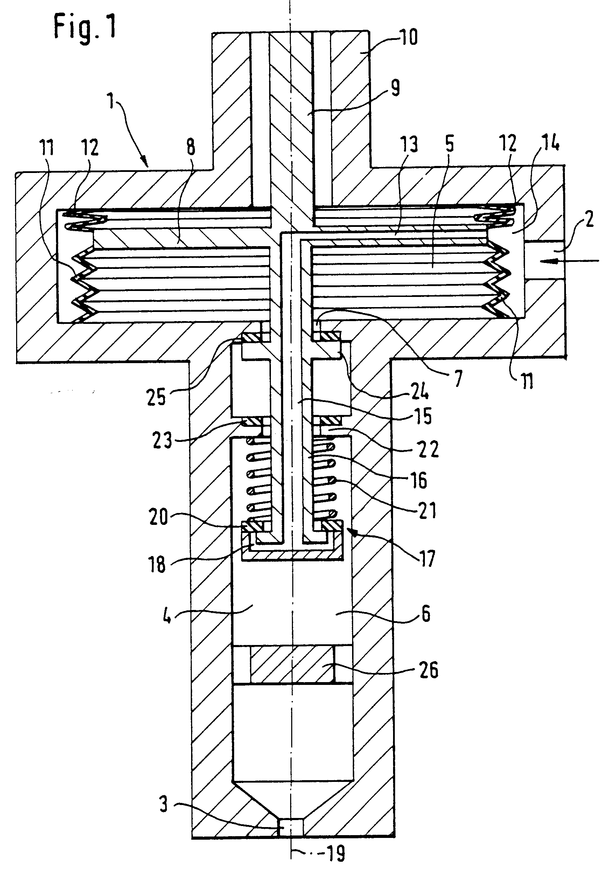

Innerhalb des Aufnahmeraumes (5) ist ein Kolben (8) beweglich geführt, der über einen Schaft (9) betätigt wird, der in einem Stutzen (10) geführt ist, der sich ausgehend vom Düsengehäuse (1) in eine dem Ausströmkanal (6) abgewandte Richtung erstreckt. Der Kolben (8) ist bei der Ausführungsform gemäß Figur 1 über Dichtungen (11,12) derart gegenüber dem Düsengehäuse (1) abgedichtet, daß ein unkontrollierter Zutritt von Flüssigkeit sowohl in den Bereich des Schaftes (9) als auch in den Bereich des Ausströmkanales (6) vermieden wird. Die Dichtungen (11,12) können beispielsweise als Faltenbälge oder als flexible Membranen ausgebildet sein.

Der Kolben (8) ist im wesentlichen plattenförmig ausgebildet und weist eine Radialbohrung (13) auf, die ein Einlaßvolumen (14) des Düsengehäuses (1) mit einer Axialbohrung ( 15) verbindet, die im Bereich eines Arbeitsschaftes ( 16) vorgesehen ist, der sich ausgehend vom Kolben (8) in eine dem Schaft (9) abgewandte Richtung erstreckt.

Der Arbeitsschaft (16) mündet im Bereich seiner dem Kolben (8) abgewandten Ausdehnung in einen Auströmkopf (17) ein, in dessen Bereich die Axialbohrung (15) in Auslaßkanäle (18) geteilt wird, die in eine dem Kolben (8) zugewandte Richtung umgelenkt sind. Die Umlenkung erfolgt dabei im wesentlichen bogenförmig ausgehend von einer Längsachse (19) des Arbeitsschaftes (16) in eine radiale Richtung. In der in Figur 1 dargestellten Positionierung ist der Ausströmkopf (17) mit den Auslaßkanälen (18) gegen ein Dichtelement (20) geführt, das einen Austritt von Flüssigkeit verhindert. Das Dichtelement (20) kann beispielsweise als ein Dichtring ausgebildet sein, der über eine Feder (21) relativ zu einem Steg (22) verspannt ist, der ausgehend vom Düsengehäuse (1) im Bereich des Ausströmkanales (6) sich in den Auströmkanal (6) hineinerstreckt. Im Bereich seiner der Feder abgewandten Richtung ist der Steg (22), der als ein Radialsteg ausgebildet sein kann, mit einem Dichtelement (23) versehen, das bei einer Anordnung der Vorrichtung in einer Arbeitspositionierung von einem Absperrelement (24) beaufschlagt ist, das mit dem Arbeitsschaft (16) verbunden ist und einen Übertritt von Flüssigkeit zwischen dem Aufnahmeraum (5) und dem Ausströmkanal (6) verhindert. Das Absperrelement (24) kann beispielsweise als ein den Arbeitsschaft (16) radial umgebender Steg ausgebildet sein. Im Bereich des Durchlaß (7) ist in einer dem Absperrelement (24) zugewandten Richtung ein weiteres Dichtelement (25) angeordnet, das vom Absperrelement (24) in der Ruhepositionierung beaufschlagt wird und in dieser Positionierung einen Übertritt von Flüssigkeit aus dem Aufnahmeraum (5) in den Ausströmkanal (6) verhindert.

In einem der Düsenmündung (3) zugewandten Bereich des Ausströmkanales (6) ist ein Drallkörper (26) angeordnet, der zu einer Rotationsbewegung der Flüssigkeit relativ zur Längsachse (19) führt und hierdurch die Versprühung und Verwirbelung der Flüssigkeit im Bereich der Düsenmündung (3) unterstützt. Zur Verbesserung der Strömungseigenschaften ist der Ausströmkanal (6) angeschrägt in die Düsenmündung (3) übergeleitet.

Bei der in Figur 1 dargestellten Ruhepositionierung ist durch einen Hub des Kolbens (8) zuvor innerhalb des Ausströmkanales (6) befindliche Flüssigkeit in den Bereich des Aufnahmeraumes (5) gesaugt worden. Relativ zur Flüssigkeitszufuhr (2) ist der Aufnahmeraum (5) durch die Dichtung (11) abgeschirmt. Durch die Kombination des Absperrelementes (24) und des Dichtelementes (25) ist der Durchlaß (7) verschlossen und die Feder (21) drückt das Dichtelement (20) gegen den Ausströmkopf (17). Hierdurch wird ein Austritt von Flüssigkeit aus der Axialbohrung (15) beziehungsweise dem Ausströmkopf (17) zuverlässig vermieden. Der Aufnahmeraum (5) wird zweckmäßigerweise derart dimensioniert, daß das von ihm aufnehmbare Flüssigkeitsvolumen dem vom Ausströmkanal (6) aufnehmbaren Flüssigkeitsvolumen entspricht.

Zur Einleitung eines erneuten Sprühvorganges wird der Kolben (8) verschoben und drückt die Flüssigkeit aus dem Bereich des Aufnahmeraumes (5) durch den Durchlaß (7) hindurch in den Bereich des Ausströmkanales (6). Bei einer Verschiebung des Kolbens (8) wird auf Grund der Kopplung durch den Arbeitsschaft (16) das Absperrelement (24) derart verschoben, daß ein Flüssigkeitsdurchtritt durch den Durchlaß (7) möglich ist. Nach einer Verschiebung des Kolbens (8) in dessen Endpositionierung liegt das Absperrelement (24) im Bereich des Dichtelementes (23) auf und ruft hier einen flüssigkeitsdichten Verschluß hervor. Durch die Verschiebung des Arbeitsschaftes (16) und durch die hiermit verbundene Verschiebung des Ausströmkopfes (17) wird die Feder (21) entspannt und nach einer vorgebbaren Weglänge der Ausströmkopf (17) vom Dichtelement (20) abgehoben. Hierdurch werden die Auslaßkanäle (18) freigegeben.

Die Positionierung des Kolbens (8) kann mit Hilfe des Schaftes (9) mechanisch erfolgen. Bei einer geeigneten Bereitstellung von Druckflächen ist es auch möglich, eine Positionierbewegung von einem Druck abzuleiten, der im Bereich der Flüssigkeitszufuhr (2) herrscht.

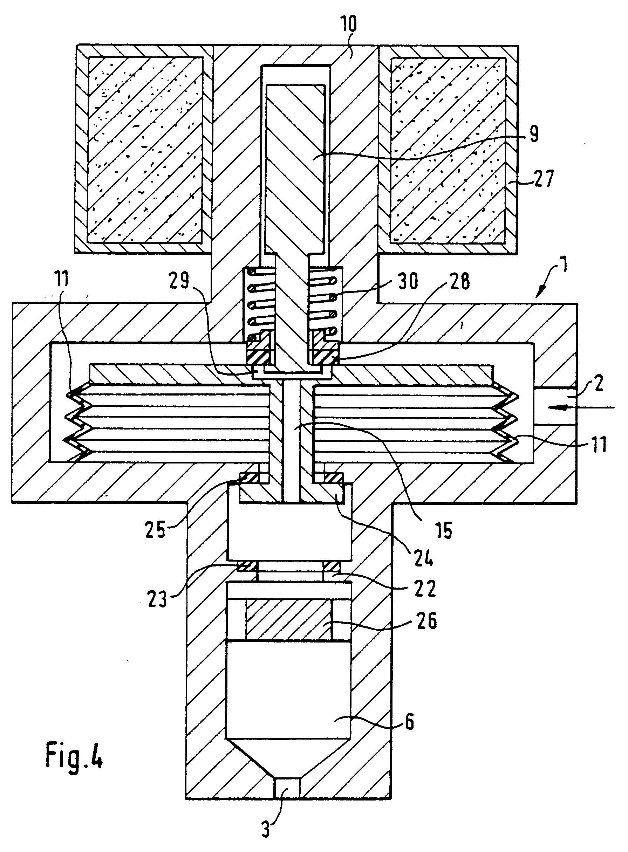

Gemäß der Ausführungsform in Figur 4 ist es auch möglich, zur Verstellung des Kolbens (8) einen Elektromagneten (27) vorzusehen. Der Schaft (9) ist dabei als Anker des Elektromagneten (27) ausgebildet. Es ist ebenfalls vorgesehen, daß die Axialbohrung (15) unmittelbar in den Ausströmkanal (6) einmündet. Statt der Kombination aus dem Ausströmkopf (17) und dem Dichtelement (20) wird ein Dichtelemtent (28) verwendet, das dem Schaft (9) zugewandt angeordnet ist und bei einer Anordnung des Kolbens (8) in der Ruhepositionierung Einströmöffnungen (29) des Kolbens (8) verschließt. Die Einströmöffnungen (29) weisen in eine dem Schaft (9) zugewandte Richtung und verlaufen im wesentlichen bogenförmig und radial nach außen weisend ausgehend von der Axialbohrung (15). Durch die Einströmöffnung (29) wird die Radialbohrung (13) des Kolbens (8) ersetzt. Zur Ermöglichung einer Zuleitung der Flüssigkeit in den Bereich der Einströmöffnungen (29) werden bei dieser Ausführungsform keine Dichtungen (12) eingebaut. Das Einlaßvolumen (14) erstreckt sich vielmehr bis in den Bereich des Schaftes (9). Aufgrund der geschlossenen Ausbildung des Stutzens (10) bei einer berührungslos wirkenden Betätigung durch den Elektromagneten (27) werden hierdurch jedoch keine Abdichtungsprobleme hervorgerufen. Zur Verspannung des Dichtelementes (28) ist eine Feder (30) vorgesehen.

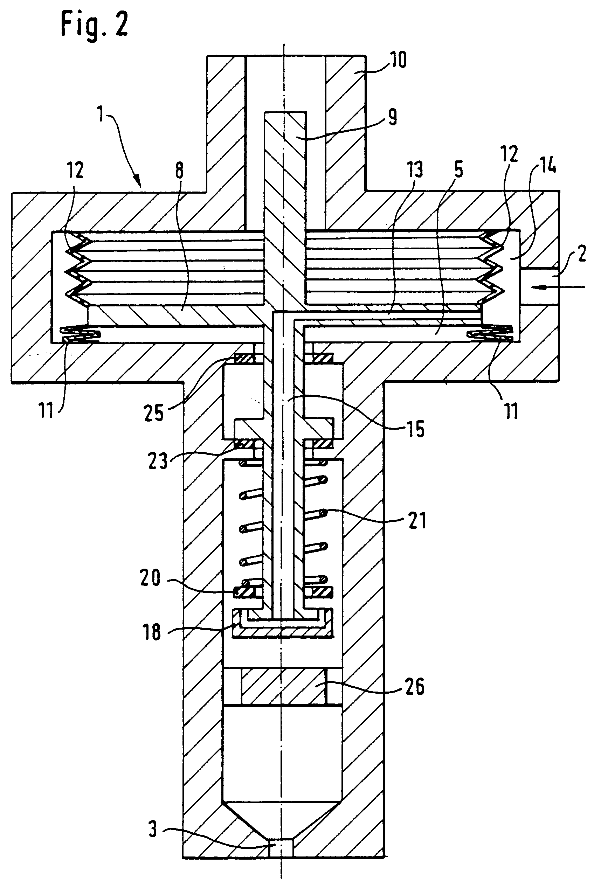

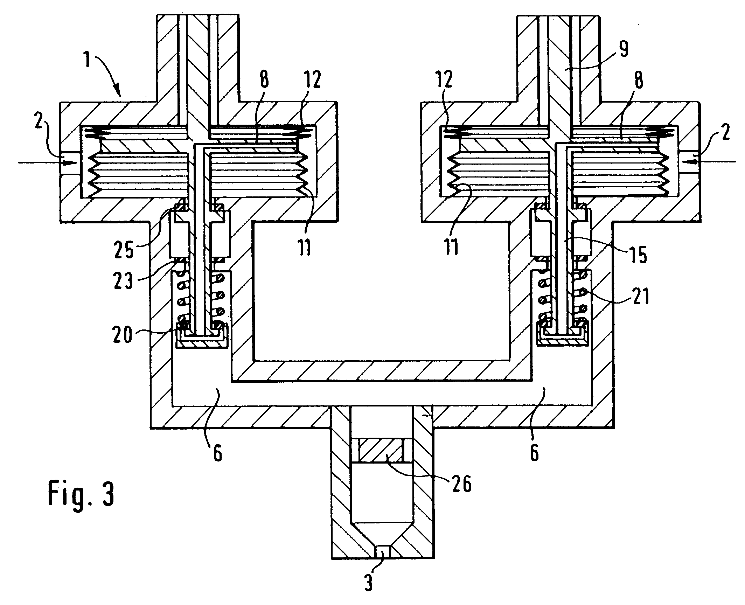

Bei der Ausführungsform gemäß Figur 3 erfolgt im wesentlichen eine Duplizierung der Komponenten gemäß der Ausführungsform in den Figuren 1 und 2. Es sind zwei Kolben (8), zwei Aufnahmeräume (5) sowie die jeweils zugeordneten Leitungs- und Dichtungselemente vorgesehen. Die Ausströmkanäle (6) münden im Bereich ihrer der Düsenmündung (3) zugewandten Ausdehnung in Strömungsrichtung vor dem Drallkörper (26) ineinander ein.

Durch die Ermöglichung einer Absaugung der Flüssigkeit aus dem Ausströmkanal (6) ist es möglich, die benötigten Absperrelemente für die Flüssigkeitsströmung konstruktiv unabhängig von der Position der Düsenmündung (3) zu plazieren. Es besteht somit nicht die Notwendigkeit, das zwischen der Absperreinrichtung und der Düsenmündung (3) befindliche Volumen zu minimieren. Der Freiraum bei der Konstruktion wird dadurch erhöht. Darüber hinaus werden weitgehende konstruktive Freiheiten zur Durchführung von Optimierungen bereitgestellt. Gemäß der Ausführungsform in Figur 3 ist es beispielsweise möglich, zur Realisierung einer Redundanz einer Düsenmündung (3) zwei unabhängige Verstell- und Verschlußelemente zuzuordnen. Bei einer Störung im Bereich eines dieser Elemente kann deshalb die vorgesehene Funktion ohne Einschränkung durch das andere Element übernommen werden. Durch die gemeinsame Versorgung einer Düsenmündung (3) wird eine gleichmäßige Sprühverteilung unabhängig von der jeweils aktiven Flüssigkeitsversorgung gewährleistet.

Die Federn (21,30) können durch vergleichbare Bauelemente mit elastischen Eigenschaften ersetzt werden. Eine derartige Substitution kann beispielsweise durch eine Membran oder einen Faltenbalg erfolgen. Zur Vorgabe der jeweiligen Positionierung des Kolbens (8) kann eine separate Regelung oder Steuerung verwendet werden. Der gemäß Figur 4 mögliche Zutritt von Flüssigkeit in den Zwischenraum zwischen Schaft (9) und Stutzen (10) kann durch geeignete Dichtelemente, beispielsweise Faltenbälge , verhindert werden. Durch die gemäß Figur 4 erfolgende Verlagerung des Ventilbereiches in den Bereich des Schaftes (9) wird das Volumen des Ausströmkanales (6) reduziert. Hierdurch erfolgt ebenfalls eine Reduktion des vom Aufnahmeraum (5) zu speichernden Flüssigkeitsvolumens und damit eine Verringerung der zu bewegenden Massen. Dies hat zur Folge, daß sowohl die Ansprechzeit verkürzt, als auch der erforderliche energetische Aufwand vermindert wird.

## Patentansprüche

1. Vorrichtung zum Einspritzen einer Flüssigkeit, insbesondere zum intermittierenden, nachtropffreien Einspritzen einer Flüssigkeit im Bereich einer Anlage zur Ableitung von Abfallwärme in Raumflugkörpern, die ein Gehäuse, mindestens einen Anker, eine Flüssigkeitszufuhr (2) sowie eine Mündung aufweist und bei der das Gehäuse einen Innenraum (4) umfaßt, der in einen mit der Mündung verbundenen Ausströmkanal (6) sowie einen Aufnahmeraum (5) unterteilt ist, in dem ein Kolben (8) beweglich geführt ist und bei der der Aufnahmeraum (5) von einem Durchlaß (7) mit dem Ausströmkanal (6) verbunden ist, der von einem mit dem Kolben (8) verbundenen Absperrelement (24) in einer Ruhepositionierung verschließbar ist, dadurch gekennzeichnet, daß die Mündung als eine Düsenmündung (3) und das Gehäuse als ein Düsengehäuse (1) ausgebildet ist, daß der Kolben (8) im wesentlichen plattenförmig ausgebildet und mit einem Arbeitsschaft (16) verbunden ist, in dem eine Axialbohrung (15) angeordnet ist und daß die Axialbohrung (15) den Ausströmkanal (6) mit einem Einlaßvolumen (14) verbindet, sowie zwischen dem Kolben (8) und dem Düsengehäuse (1) zur Abdichtung des Aufnahmeraumes (5) relativ zum Einlaßvolumen (14) eine flexible Dichtung (11) angeordnet ist.

2. Vorrichtung nach Anspruch 1, dadurch gekennzeichnet, daß der Kolben (8) mit mindestens einer Radialbohrung (13) versehen ist, die ein der Flüssigkeitszufuhr (2) zugewandt angeordnetes Einlaßvolumen (14) mit der Axialbohrung (15) verbindet.

3. Vorrichtung nach Anspruch 1 oder 2, dadurch gekennzeichnet, daß der Arbeitsschaft (16) im wesentlichen rohrförmig ausgebildet ist.

4. Vorrichtung nach einem der Ansprüche 1 bis 3, dadurch gekennzeichnet, daß der Arbeitsschaft (16) im Bereich seiner dem Kolben (8) abgewandten Ausdehnung mit einem Ausströmkopf (17) versehen ist, der Auslaßkanäle (18) aufweist, die in einer Ruhepositionierung von einem Dichtelement (20) verschlossen sind.

5. Vorrichtung nach einem der Ansprüche 1 bis 4, dadurch gekennzeichnet, daß zwischen dem Kolben (8) und dem Düsengehäuse (1) zur Abdichtung des Einlaßvolumens (14) relativ zu einem Zwischenraum, der zwischen einem Schaft (9) zur Positionierung des Kolbens (8) sowie einem den Schaft (9) führenden Stutzen (10) angeordnet ist, eine flexible Dichtung (12) angeordnet ist.

6. Vorrichtung nach Anspruch 5, dadurch gekennzeichnet, daß mindestens eine der Dichtungen (11,12) als ein Faltenbalg ausgebildet ist.

7. Vorrichtung nach einem der Ansprüche 5 oder 6, dadurch gekennzeichnet, daß zur Positionierung des Schaftes (9) ein Elektromagnet (27) vorgesehen ist, der bezüglich des einen Anker ausbildenden Schaftes (9) radial angeordnet ist.

8. Vorrichtung nach einem der Ansprüche 1 bis 7, dadurch gekennzeichnet, daß eine Positionierung des Kolbens (8) in Abhängigkeit von einem Flüssigkeitsdruck im Bereich der Flüssigkeitszufuhr (2) vorgesehen ist.

9. Vorrichtung nach einem der Ansprüche 1 bis 8, dadurch gekennzeichnet, daß zur Abdichtung des Aufnahmeraumes (5) relativ zum Ausströmkanal (6) in einer Arbeitspositionierung ein Steg (22) vorgesehen ist, der ein im wesentlichen ringförmig ausgebildetes Dichtelement (23) trägt, das zu dem Absperrelement (24) korrespondiert.

10. Vorrichtung nach einem der Ansprüche 1 bis 9, dadurch gekennzeichnet, daß das Dichtelement (20) relativ zum Steg (22) von einer Feder (21) verspannt angeordnet ist.

11. Vorrichtung nach einem der Ansprüche 1 bis 10, dadurch gekennzeichnet, daß ein die Axialbohrung (15) vorgebbar absperrendes Ventil, das im wesentlichen aus Einströmöffnungen (29) und einem Dichtelement (28) ausgebildet ist, im Bereich einer dem Schaft (9) zugewandten Ausdehnung des Kolbens (8) angeordnet ist.

12. Verfahren zum Einspritzen einer Flüssigkeit, insbesondere zum intermittierenden Einspritzen einer Flüssigkeit im Bereich einer Anlage zur Ableitung von Abfallwärme in Raumflugkörpern, bei dem die Flüssigkeit einer mit einem Ausströmkanal (6) und einer Absperreinrichtung versehenen Düse zugeführt wird und bei dem nach der Beendigung einer Zufuhr an Flüssigkeit innerhalb des Ausströmkanals (6) befindliche Flüssigkeit abgesaugt und bei einem erneuten Beginn der Zufuhr an Flüssigkeit die abgesaugte Flüssigkeit wieder in den Ausströmkanal (6) geleitet wird, dadurch gekennzeichnet, daß die abgesaugte Flüssigkeit einem Aufnahmeraum (5) zugeführt wird, der nach der Durchführung des Absaugvorganges relativ zum Ausströmkanal (6) durch eine axiale Bewegung eines den Absaugvorgang durchführenden Kolbens (8) abgedichtet wird und daß der Aufnahmeraum (5) über eine flexible Dichtung (11) flüssigkeitsdicht von einem Einlaßvolumen (14) getrennt wird.

## Claims

1. Device for injecting a liquid, in particular for intermittently injecting a liquid without subsequent dripping in the region of an installation for dissipating waste heat in space missiles, which comprises a housing, at least one armature, a liquid supply (2) as well as a mouth and in which the housing embraces an inner chamber (4), which is subdivided into a discharge channel (6) connected to the mouth and into a receiving chamber (5) in which a piston (8) is movably guided, and in which the receiving chamber (5) is connected to the discharge channel (6) by a passage (7), which in a rest position is closable by a shut-off element (24) connected to the piston (8), characterized in that the mouth takes the form of a nozzle mouth (3) and the housing takes the form of a nozzle housing (1), that the piston (8) is substantially plate-shaped and is connected to an operating shaft (16), in which an axial bore (15) is disposed, and that the axial bore (15) connects the discharge channel (6) to an inlet volume (14), and a flexible seal (11) is disposed between the piston (8) and the nozzle housing (1) for sealing off the receiving chamber (5) from the inlet volume (14).

2. Device according to claim 1, characterized in that the piston (8) is provided with at least one radial bore (13) which connects an inlet volume (14), which is disposed towards the liquid supply (2), to the axial bore (15).

3. Device according to claim 1 or 2, characterized in that the operating shaft (16) is substantially tubular.

4. Device according to one of claims 1 to 3, characterized in that the operating shaft (16) in the region of its extension remote from the piston (8) is provided with a discharge head (17), which comprises outlet channels (18), which in a position of rest are closed by a sealing element (20).

5. Device according to one of claims 1 to 4, characterized in that a flexible seal (12) is disposed between the piston (8) and the nozzle housing (1) for sealing off the inlet volume (14) from an intermediate chamber, which is disposed between a shaft (9) for positioning of the piston (8) and a connection piece (10) which guides the shaft (9).

6. Device according to claim 5, characterized in that at least one of the seals (11, 12) takes the form of bellows.

7. Device according to one of claims 5 or 6, characterized in that, for positioning of the shaft (9), an electromagnet (27) is provided, which is disposed radially relative to the shaft (9) designed as an armature.

8. Device according to one of claims 1 to 7, characterized in that a positioning of the piston (8) in dependence upon a liquid pressure in the region of the liquid supply (2) is provided.

9. Device according to one of claims 1 to 8, characterized in that, for sealing off the receiving chamber (5) from the discharge channel (6) in an operating position, a web (22) is provided, which carries a substantially annular sealing element (23) corresponding with the shut-off element (24).

10. Device according to one of claims 1 to 9, characterized in that the sealing element (20) is disposed in a braced manner relative to the web (22) by means of a spring (21).

11. Device according to one of claims 1 to 10, characterized in that a valve, which shuts off the axial bore (15) in a predeterminable manner and substantially takes the form of inlet openings (29) and a sealing element (28), is disposed in the region of an extension of the piston (8) directed towards the shaft (9).

12. Method of injecting a liquid, in particular of intermittently injecting a liquid in the region of an installation for dissipating waste heat in space missiles, whereby the liquid is supplied to a nozzle which is provided with a discharge channel (6) and a shut-off device and whereby, after completion of a liquid supply, liquid situated inside the discharge channel (6) is sucked away and, upon a resumption of liquid supply, the sucked off liquid is directed back into the discharge channel (6), characterized in that the sucked off liquid is supplied to a receiving chamber (5) which, after completion of the suction process, is sealed off from the discharge channel (6) by an axial motion of a piston (8) effecting the suction process and that the receiving chamber (5) is separated by a flexible seal (11) in a liquid-tight manner from an inlet volume (14).

## Revendications

1. Dispositif destiné à injecter un liquide, plus particulièrement à injecter un liquide par intermittence et sans perte ultérieure de gouttes dans la zone d'un dispositif destiné à dériver la chaleur résiduelle dans des engins spatiaux, qui présente un boîtier, au moins un induit, une amenée de liquide (2) et une ouverture et dans lequel le boîtier comprend un espace interne (4) divisé en un canal d'évacuation (6) connecté à l'ouverture et un espace de réception (5) dans lequel est guidé un piston (8) de manière à pouvoir coulisser et dans le cas duquel l'espace de réception (5) est relié au canal d'évacuation (6) par un passage (7) pouvant être bloqué dans une position de repos par un élément d'arrêt (24) connecté au piston (8), **caractérisé en ce que** l'ouverture est conçue comme une ouverture de tuyère (3) et en ce que le boîtier est conçu comme un boîtier de tuyère (1), en ce que le piston (8) est principalement conçu de façon plate et est relié à une tige de travail (16) dans laquelle est aménagé un alésage axial (15) et en ce que l'alésage axial (15) connecte le canal d'évacuation (6) à un volume d'admission (14) de même qu'est disposé un joint flexible (11) entre le piston (8) et le boîtier de tuyère (1) destiné à étancher l'espace de réception (5) par rapport au volume d'admission (14).

2. Dispositif selon la revendication 1, caractérisé en ce que le piston (8) est pourvu d'au moins un alésage radial (13) qui connecte un volume d'admission (14) tourné vers l'amenée de liquide (2) à l'alésage axial (15).

3. Dispositif selon la revendication 1 ou 2, caractérisé en ce que la tige de travail (16) est principalement conçue de façon tubulaire.

4. Dispositif selon l'une ou l'autre des revendications 1 à 3, caractérisé en ce que la tige de travail (16) est pourvue dans la zone de son extension opposée au piston (8) d'une tête d'évacuation (17) présentant des canaux d'échappement (18) fermés en position de repos par un élément d'étanchéité (20).

5. Dispositif selon l'une ou l'autre des revendications 1 à 4, caractérisé en ce que un joint flexible (12) est disposé entre le piston (8) et le boîtier de tuyère (1) destiné à étancher le volume d'admission (14) par rapport à un espace intermédiaire placé entre une tige (9) destinée à positionner le piston (8) et un manchon (10) guidant la tige (9).

6. Dispositif selon la revendication 5, caractérisé en ce que au moins un des joints (11, 12) est conçu comme un soufflet.

7. Dispositif selon l'une ou l'autre des revendications 5 ou 6, caractérisé en ce que afin de positionner la tige (9) est prévu un électro-aimant (27) disposé radialement par rapport à la tige (9) formant un induit.

8. Dispositif selon l'une ou l'autre des revendications 1 à 7, caractérisé en ce que un positionnement du piston (8) est prévu en fonction d'une pression de liquide dans la zone d'amenée de liquide (2).

9. Dispositif selon l'une ou l'autre des revendications 1 à 8, caractérisé en ce que dans le but d'étancher l'espace de réception (5) par rapport au canal d'évacuation (6) dans une position de fonctionnement est prévu un épaulement (22) qui porte un élément d'étanchéité (23) conçu principalement en forme d'anneau et qui correspond à l'élément d'arrêt (24).

10. Dispositif selon l'une ou l'autre des revendications 1 à 9, caractérisé en ce que l'élément d'étanchéité (20) par rapport à l'épaulement (22) est fixé par un ressort (21).

11. Dispositif selon l'une ou l'autre des revendications 1 à 10, caractérisé en ce que une soupape arrêtant l'alésage axial (15) de façon prédéterminée, composée principalement d'ouvertures d'admission (29) et d'un élément d'étanchéité (28), est disposée dans la zone d'une extension du piston (8) tournée vers la tige (9).

12. Dispositif destiné à injecter un liquide, plus particulièrement à injecter un liquide par intermittence dans la zone d'un dispositif destiné à dériver la chaleur résiduelle dans des engins spatiaux, dans lequel le liquide est amené à une tuyère pourvue d'un canal d'évacuation (6) et d'un dispositif d'arrêt, et dans lequel le liquide présent après la fin de l'apport en liquide à l'intérieur du canal d'évacuation (6) est aspiré, le liquide aspiré lors d'un nouveau début d'apport en liquide étant à nouveau amené dans le canal d'évacuation (6), caractérisé en ce que le liquide aspiré est transporté dans un espace de réception (5) qui, après exécution du processus d'aspiration, est étanché par rapport au canal d'évacuation (6) par un mouvement axial d'un piston (8) accomplissant le processus d'aspiration et en ce que l'espace de réception (5) est séparé d'un volume d'admission (14) par un joint flexible (11) de manière étanche par rapport au liquide.
